# EUROPEAN PATENT SPECIFICATION

(11) **EP 3 112 123 B1**
(45) Date of publication and mention of the grant of the patent: **27.03.2019**
(21) Application number: 16174008.9
(22) Date of filing: 10.06.2016
(51) Int. Cl.: B29C 45/77

(54) **INJECTION MOLDING MACHINE**
SPRITZGIESSMASCHINE
MACHINE DE MOULAGE À INJECTION

(30) Priority: 30.06.2015 JP 2015131733
(43) Date of publication of application: 04.01.2017
(73) Proprietor: SUMITOMO HEAVY INDUSTRIES, LTD., Tokyo 141-6025 (JP)
(72) Inventor: HIOKI, Kazuya, Yokosuka-shi, Kanagawa 237-8555 (JP)
(74) Representative: Louis Pöhlau Lohrentz

(56) References cited:
- JP-A- H09 277 328
- US-A- 4 120 631
- US-A- 5 371 450
- US-A1- 2013 032 961
- US-A1- 2013 147 078
- US-B1- 6 811 387

## Description

### BACKGROUND OF THE INVENTION

### Field of the Invention

A certain embodiment of the present invention relates to an injection molding machine.

### Description of Related Art

Injection molding machines include, for example, a cylinder that heats a molding material that fills the inside of a mold unit, a screw that is rotatably disposed within the cylinder so as to be movable forward and backward; an injection motor that moves the screw forward and backward; and a controller that controls the injection motor (for example, refer to Japanese Unexamined Patent Application Publication No. 2011-183705). The controller controls the injection motor, thereby performing a filling process and a holding pressure process . In the filling process, the molding material accumulated in front of the screw is injected from the cylinder to fill the inside of the mold unit by moving the screw forward and backward at a setting speed. In the subsequent holding pressure process, the screw is pushed forward with a setting pressure, and a pressure is applied to the molding material within the mold unit. The molding material can be replenished when there is a shortage thereof.

In the holding pressure process, the molding material that has filled the inside of the mold unit is gradually cooled and hardened. The elastic modulus of the molding material rises as the molding material is hardened, and in a case where the amount of elastic deformation of the molding material remains constant, the pressure applied to the molding material increases. Therefore, the stability of pressure control may decrease during the holding pressure process. US 2013/0147078 A1 discloses an injection molding machine according to the prior art.

### SUMMARY OF THE INVENTION

The invention has been made in view of the above problems, and a main object thereof is to provide an injection molding machine that improves the stability of pressure control in a holding pressure process.

In order to solve the above problems, according to an aspect of the invention, there is provided an injection molding machine including a cylinder that heats a molding material that fills the inside of a mold unit; an injection member that is disposed within the cylinder so as to be movable forward and backward; a driving source that moves the injection member forward and backward; and a controller that controls the driving source. The controller lowers a control gain used for the control of the driving source during a holding pressure process, and wherein the controller lowers the control gain according to elapse of time during the holding pressure process.

According to the aspect of the invention, the injection molding machine that improves the stability of the pressure control in the holding pressure process is provided.

### BRIEF DESCRIPTION OF THE DRAWINGS

FIG. 1 is a view illustrating an injection molding machine according to an embodiment of the invention.
FIG. 2 is a view illustrating a control system of the injection molding machine according to the embodiment of the invention.

### DETAILED DESCRIPTION OF THE INVENTION

An embodiment for carrying out the invention will be described below with reference to the drawings, the same or corresponding components being designated by the same or corresponding reference signs, and the description thereof being omitted.

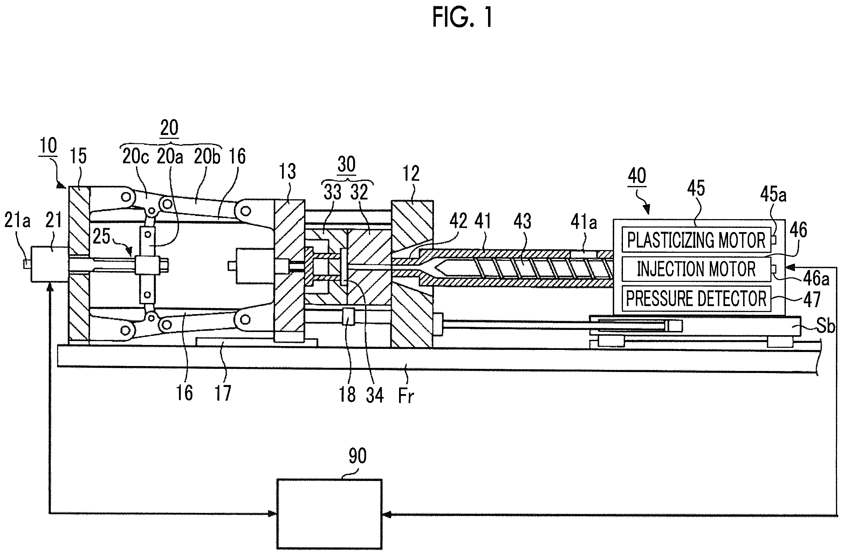

FIG. 1 is a view illustrating an injection molding machine according to an embodiment. The injection molding machine has a frame Fr, a mold clamping unit 10, an injection unit 40, and a controller 90.

First, the mold clamping unit 10 will be described. In the description of the mold clamping unit 10, a description will be made with a movement direction (rightward direction in FIG. 1) of a movable platen 13 during mold closing being as the front and a movement direction (leftward direction in FIG. 1) of the movable platen 13 during mold opening being as the rear.

The mold clamping unit 10 performs mold closing, mold clamping, and mold opening of a mold unit 30. The mold clamping unit 10 has s stationary platen 12, the movable platen 13, a rear platen 15, a tie-bar 16, a toggle mechanism 20, a mold clamping motor 21, and a motion conversion mechanism 25.

The stationary platen 12 is fixed to the frame Fr. A stationary mold 32 is attached to the surface of the stationary platen 12 that faces the movable platen 13.

The movable platen 13 is made movable along a guide (for example, a guide rail) 17 laid on the frame Fr, and is made movable forward and backward with respect to the stationary platen 12. A movable mold 33 is attached to the surface of the movable platen 13 that faces the stationary platen 12.

Mold closing, mold clamping, and mold opening are performed by moving the movable platen 13 forward and backward with respect to the stationary platen 12. The stationary mold 32 and the movable mold 33 constitute the mold unit 30.

The rear platen 15 is coupled to the stationary platen 12 at a distance therefrom, and is placed on the frame Fr so as to be movable in a mold opening/closing direction. In addition, the rear platen 15 may be made movable along a guide laid on the frame Fr. The guide of the rear platen 15 may be shared by the guide 17 of the movable platen 13.

In addition, in the present embodiment, the stationary platen 12 is fixed to the frame Fr and the rear platen 15 is made movable in the mold opening/closing direction with respect to the frame Fr. However, the rear platen 15 may be fixed to the frame Fr and the stationary platen 12 may be made movable in the mold opening/closing direction with respect to the frame Fr.

The tie-bar 16 couples the stationary platen 12 and the rear platen 15 with a space therebetween. A plurality of the tie-bars 16 may be used. Each tie-bar 16 is made parallel to the mold opening/closing direction, and is extended in response to a clamping force. At least one tie-bar 16 is provided with a clamping force detector 18. The clamping force detector 18 may be of a strain gauge type, and may detect the strain of the tie-bar 16, thereby detecting a clamping force.

In addition, the clamping force detector 18 is not limited to the strain gauge type, and may be of a piezoelectric type, a capacitance type, a hydraulic type, an electromagnetic type, or the like, and the attachment position thereof is also not limited to the tie-bar 16.

The toggle mechanism 20 is disposed between the movable platen 13 and the rear platen 15. The toggle mechanism 20 is constituted of a cross-head 20a, a plurality of links 20b and 20c, and the like. One link 20b is rockably attached to the movable platen 13, and the other link 20c is rockably attached to the rear platen 15. The links 20b and 20c are bendably and stretchably coupled together by a pin or the like. By moving the cross-head 20a forward and backward, the plurality of links 20b and 20c are bent and stretched, and the movable platen 13 is moved forward and backward with respect the rear platen 15.

The mold clamping motor 21 is attached to the rear platen 15, and the movable platen 13 is moved forward and backward by moving the cross-head 20a forward and backward. The motion conversion mechanism 25, which converts the rotational motion of the mold clamping motor 21 into a linear motion to transmit the converted linear motion to the cross-head 20a, is provided between the mold clamping motor 21 and the cross-head 20a. The motion conversion mechanism 25 is constituted of, for example, a ball screw mechanism. The speed of the cross-head 20a is detected by an encoder 21a or the like of the mold clamping motor 21.

The operation of the mold clamping unit 10 is controlled by the controller 90. The controller 90 controls a mold closing process, a mold clamping process, a mold opening process, and the like.

In the mold closing process, the movable mold 33 is brought into contact with the stationary mold 32 by driving the mold clamping motor 21 to move the movable platen 13 forward.

In the mold clamping process, a clamping force is generated by further driving the mold clamping motor 21. A cavity space 34 is formed between the movable mold 33 and the stationary mold 32 during mold clamping, and the cavity space 34 is filled with a liquid molding material. The molding material within the cavity space 34 is hardened and becomes a molding product.

In the mold opening process, the movable mold 33 is separated from the stationary mold 32 by driving the mold clamping motor 21 to move the movable platen 13 backward.

Although the mold clamping unit 10 of the present embodiment has the mold clamping motor 21 as a driving source, the mold clamping unit may have a hydraulic cylinder instead of the mold clamping motor 21. Additionally, the mold clamping unit 10 may have a linear motor for mold opening and closing, and may have an electromagnet for mold clamping.

Next, the injection unit 40 will be described. In the description of the injection unit 40, unlike the description of the mold clamping unit 10, a description will be made with a movement direction (leftward direction in FIG. 1) of the screw 43 during filling being as the front, and a movement direction (right ward direction of FIG. 1) of the screw 43 during plasticizing being as the rear.

The injection unit 40 is installed in a sliding base Sb that is movable forward and backward with respect to the frame Fr, and is movable forward and backward with respect to the mold unit 30. The injection unit 40 is touched on the mold unit 30, and the inside of the mold unit 30 is filled with a molding material. The injection unit 40 has, for example, a cylinder 41, a nozzle 42, a screw 43, a plasticizing motor 45, an injection motor 46, and a pressure detector 47.

The cylinder 41 heats the molding material supplied from a supply port 41a. The supply port 41a is formed at a rear part of the cylinder 41. A heating source, such as a heater, is provided at the outer periphery of the cylinder 41.

The nozzle 42 is provided at a front end of the cylinder 41, and is pressed against the mold unit 30.

The screw 43 is disposed within the cylinder 41 so as to be rotatable and movable forward and backward. The screw 43 corresponds to an injection member set forth in the claims.

The plasticizing motor 45 rotates the screw 43, thereby feeding the molding material forward along a spiral groove of the screw 43. The molding material is gradually melted by the heat from the cylinder 41 while being fed forward. When the liquid molding material is fed to the front of the screw 43 and accumulated at the front part of the cylinder 41, the screw 43 is moved backward.

The injection motor 46 moves the screw 43 forward and backward. The injection motor 46 corresponds to a driving source set forth in the claims. The injection motor 46 moves the screw 43 forward and backward, thereby injecting the liquid molding material accumulated in front of the screw 43 from the cylinder 41, and filling the inside of the mold unit 30 with the molding material. Thereafter, the injection motor 46 pushes the screw 43 forward, and applies a pressure to the molding material within the mold unit 30. The molding material can be replenished when there is a shortage thereof. A motion conversion mechanism that converts the rotational motion of the injection motor 46 into a linear motion of the screw 43 is provided between the injection motor 46 and the screw 43.

The pressure detector 47 is disposed, for example, between the injection motor 46 and the screw 43, and detects a pressure that the screw 43 receives from the molding material, a back pressure to the screw 43, and the like. The pressure that the screw 43 receives from the molding material is equivalent to a pressure acting on the molding material from the screw 43.

The controller 90 has a central processing unit (CPU), and a storage medium, such as a memory. The controller 90 makes the CPU execute a program stored in the storage medium, thereby controlling the injection unit 40 and the like.

The controller 90 performs a molding operation of performing a series of processes, such as a fillingprocess, a holding pressure process, and a cooling process, thereby manufacturing a molding product. The controller 90 performs a cycle operation of repeating the series of processes, thereby repeatedly manufacturing a molding product. A plasticizing process may be performed during the cooling process for shortening of a molding cycle.

In the filling process, the injection motor 46 is driven to move the screw 43 forward at a setting speed, and the inside of the mold unit 30 is filled with the liquid molding material accumulated in front of the screw 43. The position and the speed of the screw 43 are detected by, for example, an encoder 46a of the injection motor 46. If the position of the screw 43 reaches a predetermined position, switching (so-called V/P switching) from the filling process to the holding pressure process is performed.

In addition, after the position of the screw 43 reaches the predetermined position in the filling process, the screw 43 may be temporarily stopped at the predetermined position, and then, the V/P switching may be performed. Immediately before the V/P switching, the slow-speed forward movement or the slow-speed backward movement of the screw 43 may be performed instead of the stop of the screw 43.

In the holding pressure process, the injection motor 46 is driven to push the screw 43 forward with a setting pressure, and a pressure is applied to the molding material within the mold unit 30. The molding material can be replenished when there is a shortage thereof. The pressure of the molding material is detected by, for example, the pressure detector 47. In the holding pressure process, the molding material within the mold unit 30 is gradually cooled, and an inlet of the cavity space 34 is covered with a hardened molding material when the holding pressure process is completed. This state is referred to as a gate seal, and a backflow of the molding material from the cavity space 34 is prevented. A cooling process is started after the holding pressure process. In the cooling process, hardening of the molding material within the cavity space 34 is performed. The plasticizing process may be performed during the cooling process.

In the plasticizing process, the plasticizing motor 45 is driven to rotate the screw 43 at a set number of rotations, and feeds the molding material forward along the spiral groove of the screw 43. Accordingly, the molding material is gradually melted with this feeding. When the liquid molding material is fed to the front of the screw 43 and accumulated at the front part of the cylinder 41, the screw 43 is moved backward. The number of rotations of the screw 43 is detected by, for example, an encoder 45a of the plasticizing motor 45.

In the plasticizing process, the injection motor 46 is driven to apply a set back pressure to the screw 43 in order to limit a sudden backward movement of the screw 43. The set back pressure to the screw 43 is detected by, for example, the pressure detector 47. The plasticizing process is completed if the screw 43 moves backward to a predetermined position and a predetermined amount of the molding material is accumulated in front of the screw 43.

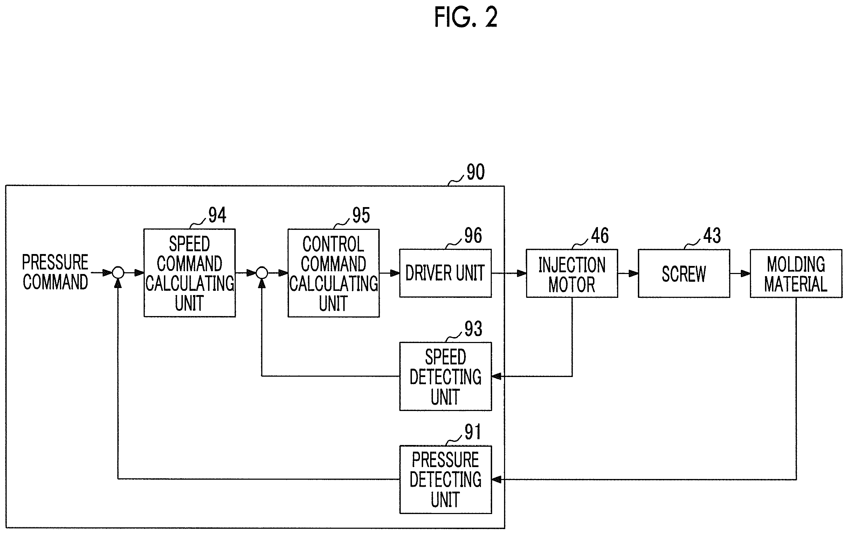

FIG. 2 is a view illustrating the injection molding machine according to the embodiment of the invention. The controller 90 has a pressure detecting unit 91, a speed detecting unit 93, a speed command calculating unit 94, a control command calculating unit 95, a driver unit 96, and the like.

The pressure detecting unit 91 detects an actual pressure result P of the screw 43. The actual pressure result P of the screw 43 corresponds to an actual pressure result of the molding material, and is detected using, for example, the pressure detector 47.

The speed detecting unit 93 detects an actual speed result V of the screw 43. The actual speed result V of the screw 43 corresponds to an actual rotating speed result of the injection motor 46, and is detected using, for example, the encoder 46a of the injection motor 46. As for the speed of the screw 43, for example, the speed at the time of the forward movement of the screw 43 is indicated as positive, and the speed at the time of the backward movement of the screw 43 is indicated as negative.

The speed command calculating unit 94 calculates a speed command on the basis of a pressure command Pref and the actual pressure result P. For example, the speed command calculating unit 94 calculates a speed command Vref so that the deviation between the pressure command Pref and the actual pressure result P becomes zero. For example, PI calculation, PID calculation, or the like is used for the calculation of the speed command Vref.

The control command calculating unit 95 creates an output wave of the driver unit 96 on the basis of the speed command Vref and the actual speed result V. For example, the control command calculating unit 95 creates an output wave of the driver unit 96 so that the deviation between the speed command Vref and the actual speed result V becomes zero. For example, PI calculation, PID calculation, or the like is used for the creation of the output wave of the driver unit 96. The control command calculating unit 95 creates a pulse width modulation (PWM) signal by comparing the output wave of the driver unit 96 with a carrier wave.

In addition, although the control command calculating unit 95 of the present embodiment creates the PWM signal, the calculating unit may create a pulse amplitude modulation (PAM) signal. A method of controlling the driver unit 96 is not particularly limited.

The driver unit 96 is constituted of an inverter that convert DC power into AC power. The inverter has, for example, a plurality of legs each constituted of two switching elements. Diodes are connected inversely parallel to each switching element. The diodes may be built in each switching element. The inverter is switched according to the PWM signal from the control command calculating unit 95, and supplies AC power to the injection motor 46.

Meanwhile, in the holding pressure process, the injection motor 46 is driven to push the screw 43 forward with a setting pressure, and a pressure is applied to the molding material within the mold unit 30. In the holding pressure process, the molding material that has filled the inside of the mold unit 30 is gradually cooled and hardened. The elastic modulus of the molding material rises as the molding material is hardened. If the elastic modulus of the molding material rises in a case where the amount of elastic deformation of the molding material is the same, a pressure applied to the molding material increases.

Hence, the controller 90 lowers a control gain (>0) used for the control of the injection motor 46, during the holding pressure process. For example, the controller 90 lowers a proportional gain used for the calculation of the speed command Vref, during the holding pressure process.

Generally, in proportional control, the amount of operation is generated by multiplying deviation by the proportional gain. In a case where the proportional gain is constant, a force to bring the deviation close to zero is larger as the deviation is larger. On the other hand, in a case where the deviation is constant, a force to bring the deviation close to zero is smaller as the proportional gain is smaller.

The controller 90 can lower the proportional gain during the holding pressure process, thereby suppressing an increase in the pressure of the molding material caused by a rise in the elastic modulus of the molding material, and improving the stability of pressure control.

The control gain that the controller 90 lowers during the holding pressure process is not limited to the proportional gain, and may be, for example, an integration gain, a rate gain, and the like, or may be a plurality of arbitrary combinations of these three gains. Additionally, the control gain that the controller 90 lowers during the holding pressure process may be any one or both of a control gain used for the calculation of the speed command Vref and a control gain used for the creation of the output wave of the driver unit 96. As the controller 90 lowers the control gain used for the control of the injection motor 46 during the holding pressure process, the stability of the pressure control can be improved.

In addition, although the controller 90 calculates the speed command Vref on the basis of the pressure command Pref and the actual pressure result P in FIG. 2, the controller may calculate a position command instead of the speed command Vref. The position is a position of the screw 43. In this case, the controller 90 creates the output wave of the driver unit 96 on the basis of the position command and an actual position result. In this case, the control gain that the controller 90 lowers during the holding pressure process may be any one or both of a control gain used for the calculation of the position command and the control gain used for the creation of the output wave of the driver unit 96.

In addition, although the controller 90 has two feedback loops in FIG. 2, the controller may have one feedback loop. That is, the controller 90 may create the output wave of the driver unit 96 instead of the calculating the speed command Vref, on the basis of the pressure command Pref and the actual pressure result P. In this case, the control gain that the controller 90 lowers during the holding pressure process is a control gain used for the creation of the output wave of the driver unit 96. The controller 90 may have three or more feedback loops.

The controller 90 continuously or stepwisely lowers the above control gain during the holding pressure process. The controller 90 just has to lower the control gain once or more in a case where the above control gain is stepwisely lowered.

The controller 90 lowers the above control gain according to, for example, elapse of time during the holding pressure process. The time can be measured by a timer provided in the controller 90. A relationship between an elapsed time and the control gain is obtained by a test or the like so that the pressure control in the holding pressure process is stabilized, and is stored in the storage medium of the controller 90. During the holding pressure process, the controller 90 monitors the elapsed time, and lowers the control gain according to information stored in the storage medium.

Additionally, the controller 90 may lower the control gain used for the control of the injection motor 46 according to a drop in the temperature of the molding material within the mold unit 30, during the holding pressure process. The temperature of the molding material within the mold unit 30 can be measured by a temperature sensor provided in the mold unit 30. A relationship between the temperature of the molding material within the mold unit 30 and the control gain is obtained by a test or the like so that the pressure control in the holding pressure process is stabilized, and is stored in the storage medium of the controller 90. During the holding pressure process, the controller 90 monitors the temperature of the molding material within the mold unit 30, and lowers the control gain according to the information stored in the storage medium.

Moreover, the controller may lower the control gain used for the control of the injection motor 46 according to a rise in the viscosity of the molding material within the mold unit 30, during the holding pressure process. The viscosity of the molding material within the mold unit 30 can be estimated from the temperature of the molding material within the mold unit 30. A relationship between the viscosity of the molding material within the mold unit 30 and the control gain is obtained by a test or the like so that the pressure control in the holding pressure process is stabilized, and is stored in the storage medium of the controller 90. During the holding pressure process, the controller 90 monitors the viscosity of the molding material within the mold unit 30, and lowers the control gain according to the information stored in the storage medium.

In addition, during the holding pressure process, the controller 90 may monitor a plurality of items of (1) the elapsed time, (2) the temperature of the molding material within the mold unit 30, and (3) the viscosity of the molding material within the mold unit 30, and may lower the control gain on the basis of the monitoring results.

The controller 90 may store a plurality of types of lowering patterns of the control gain lowered during the holding pressure process, in the storage medium. The controller 90 is connected with an operating unit that receives a user's input operation, and reads and uses a lowering pattern according to the user's input operation in the operating unit, from the storage medium. Additionally, the controller 90 may evaluate the stability of the pressure control in the holding pressure process, and may change a lowering pattern to be used according to evaluation results. A high stable lowering pattern can be used. The stability of the pressure control can be evaluated on the basis of, for example, the magnitude of the fluctuation width of the actual pressure result P of the screw 43. The stability can be estimated as being better as the magnitude of the fluctuation width is smaller.

Although the embodiment of the injection molding machine has been described above, the invention is not limited to the above-described embodiment, and various alterations and improvements can be made within the scope of the invention described in the claims.

For example, although the injection unit of the above embodiment is of an in-line screw type, the injection unit may be of a preplasticization type. The preplasticization type injection unit supplies a molding material melted within a plasticizing cylinder to an injection cylinder, and injects the molding material into the mold unit from the injection cylinder. The screw is disposed inside the plasticizing cylinder so as to be rotatable or rotatable and movable forward and backward, and a plunger is disposed within the injection cylinder so as to be movable forward and backward. In a case where the injection unit is of the preplasticization type, the injection cylinder corresponds to a cylinder set forth in the claims, and the plunger corresponds to an injection member set forth in the claims.

Additionally, although the injection motor of the above embodiment is a rotary motor, the injection motor may be a linear motor. Additionally, fluid pressure cylinders, such as a hydraulic cylinder and a pneumatic cylinder, may be used instead of the injection motor.

## Claims

1. An injection molding machine comprising:
a cylinder (41) that that is configured to heat a molding material that fills the inside of a mold unit;
an injection member that is disposed within the cylinder (41) so as to be movable forward and backward;
a driving source that is configured to move the injection member forward and backward; a controller (90) that is configured to control the driving source; and a timer provided in the controller (90) and configured to measure a time,
wherein the controller (90) is configured to lower a control gain used for the control of the driving source during in a holding pressure process,
wherein the controller (90) is configured to lower the control gain according to elapse of time during the holding pressure process,
wherein a relationship between an elapsed time and the control gain is obtained by a test so that the pressure control in the holding pressure process is stabilized, and is stored in a storage medium of the controller (90), and
wherein, during the holding pressure process, the controller (90) is configured to monitor the elapsed time, and is configured to lower the control gain according to information stored in the storage medium.

2. The injection molding machine according to Claim 1,
wherein the controller (90) is configured to lower the control gain according to a drop in the temperature of the molding material within the mold unit during the holding pressure process .

3. The injection molding machine according to Claims 1 or 2,
wherein the controller (90) is configured to lower the control gain according to a rise in the viscosity of the molding material of the mold unit during the holding pressure process.

4. The injection molding machine according to any one of Claims 1 to 3,
wherein the controller (90) is configured to change a lowering pattern of the control gain based on the fluctuation of an actual pressure result of the injection member during the holding pressure process.

## Patentansprüche

1. Spritzgießmaschine umfassend
einen Zylinder (41), der konfiguriert ist, eine Formmasse zu erwärmen, die den Innenraum einer Formeinheit füllt;
ein Einspritzelement, das in dem Zylinder (41) so angeordnet ist, dass es vorwärts und rückwärts beweglich ist;
eine Antriebsquelle, die konfiguriert ist, das Einspritzelement vorwärts und rückwärts zu bewegen; eine Steuereinrichtung (90), die konfiguriert ist, die Antriebsquelle zu steuern; und einen Zeitgeber, der in der Steuereinrichtung (90) bereitgestellt ist und konfiguriert ist, eine Zeit zu messen,
wobei die Steuereinrichtung (90) konfiguriert ist, eine Steuerverstärkung abzusenken, die zur Steuerung der Antriebsquelle während eines Druckhaltevorgangs verwendet wird,
wobei die Steuereinrichtung (90) konfiguriert ist, die Steuerverstärkung gemäß dem Verstreichen der Zeit während des Druckhaltevorgangs abzusenken,
wobei eine Beziehung zwischen einer verstrichenen Zeit und der Steuerverstärkung durch einen Versuch erhalten wird, so, dass die Drucksteuerung im Druckhaltevorgang stabilisiert wird, und in einem Speichermedium der Steuereinrichtung (90) gespeichert wird, und
wobei die Steuerung (90) während des Druckhaltevorgangs konfiguriert ist, die verstrichene Zeit zu überwachen, und konfiguriert ist, die Steuerverstärkung gemäß Informationen abzusenken, die im Speichermedium gespeichert sind.

2. Spritzgießmaschine nach Anspruch 1,
wobei die Steuereinrichtung (90) konfiguriert ist, die Steuerverstärkung gemäß einem Abfall der Temperatur der Formmasse in der Formeinheit während des Druckhaltevorgangs abzusenken.

3. Spritzgießmaschine nach Anspruch 1 oder 2,
wobei die Steuereinrichtung (90) konfiguriert ist, die Steuerverstärkung gemäß einem Anstieg der Viskosität der Formmasse der Formeinheit während des Druckhaltevorgangs abzusenken.

4. Spritzgießmaschine nach einem der Ansprüche 1 bis 3,
wobei die Steuereinrichtung (90) konfiguriert ist, ein Absenkmuster der Steuerverstärkung auf der Grundlage der Schwankung eines tatsächlichen Druckergebnisses des Einspritzelements während des Druckhaltevorgangs zu ändern.

## Revendications

1. Une machine de moulage par injection comprenant :
un cylindre (41) qui est configuré pour chauffer une matière de moulage qui remplit l'intérieur d'une unité de moule ;
un élément d'injection qui est disposé dans le cylindre (41) de façon à pouvoir se déplacer vers l'avant et vers l'arrière ;
une source d'entraînement qui est configurée pour déplacer l'élément d'injection vers l'avant et vers l'arrière ; un contrôleur (90) qui est configuré pour contrôler la source d'entraînement ; et une minuterie prévue dans le contrôleur (90) et configurée pour mesurer une durée,
dans laquelle le contrôleur (90) est configuré pour réduire un gain de contrôle utilisé pour le contrôle de la source d'entraînement pendant un processus de pression de maintien,
dans laquelle le contrôleur (90) est configuré pour réduire le gain de contrôle selon la durée écoulée pendant le processus de pression de maintien,
dans laquelle une relation entre une durée écoulée et le gain de contrôle est obtenue par un test de sorte que le contrôle de pression pendant le processus de pression de maintien soit stabilisé, et est stockée dans un moyen de stockage du contrôleur (90), et
dans laquelle, pendant le processus de pression de maintien, le contrôleur (90) est configuré pour surveiller la durée écoulée, et est configuré pour réduire le gain de contrôle selon les informations stockées dans le moyen de stockage.

2. La machine de moulage par injection selon la revendication 1,
dans laquelle le contrôleur (90) est configuré pour réduire le gain de contrôle selon une baisse de la température de la matière de moulage dans l'unité de moule pendant le processus de pression de maintien.

3. La machine de moulage par injection selon la revendication 1 ou 2,
dans laquelle le contrôleur (90) est configuré pour réduire le gain de contrôle selon une augmentation de la viscosité de la matière de moulage de l'unité de moule pendant le processus de pression de maintien.

4. La machine de moulage par injection selon l'une quelconque des revendications 1 à 3,
dans laquelle le contrôleur (90) est configuré pour changer un mode de diminution du gain de contrôle sur la base de la fluctuation d'un résultat de pression réelle de l'élément d'injection pendant le processus de pression de maintien.
